# EUROPÄISCHE PATENTANMELDUNG

(11) **EP 3 617 912 A1**
(43) Veröffentlichungstag der Anmeldung: **04.03.2020**
(21) Anmeldenummer: 18191213.0
(22) Anmeldetag: 28.08.2018
(51) Int. Cl.: G06F 17/50, G06N 20/00

(54) **VERFAHREN UND VORRICHTUNG ZUM RECHNERGESTÜTZTEN GENERIEREN EINER KOMPONENTE FÜR EIN TECHNISCHES SYSTEM**

(71) Anmelder: Siemens Aktiengesellschaft, 80333 München (DE)
(72) Erfinder: Botero Halblaub, Andrés, 85614 Kirchseeon (DE); Garhammer, Andreas, 84367 Reut (DE)

(57) **Zusammenfassung**

Die Erfindung betrifft ein Verfahren und eine Vorrichtung zum rechnergestützten Generieren einer Komponente für ein technisches System. Es werden Anwendungsdaten, die erste Attribute von ersten Komponenten eines technischen Systems umfassen, in ein trainiertes maschinellen Lernverfahren (ML) eingelesen, wobei das maschinelle Lernverfahren (ML) darauf trainiert ist, Attribute von verschiedenen Komponenten eines technischen Systems derart zu kombinieren, dass aus der Kombination der Attribute eine zu diesen Komponenten ähnliche Komponente generiert wird. Das trainierte maschinelle Lernverfahren (ML) wird mit den Anwendungsdaten ausgeführt, woraus eine den ersten Komponenten ähnliche neue Komponente (K') aus kombinierten ersten Attributen verschiedener erster Komponenten generiert wird. Die neue Komponente (K') wird ausgegeben.

## Beschreibung

Die Erfindung betrifft ein Verfahren und eine Vorrichtung zum rechnergestützten Generieren einer Komponente für ein technisches System mittels eines maschinellen Lernverfahrens.

Die Konstruktion und/oder der Entwurf von komplexen technischen Systemen und/oder Hardware- und/oder Software-Komponenten eines technischen Systems benötigt in der Regel ein umfangreiches Expertenwissen einer Fachperson und eine komplexe Planung eines Entwicklungs- oder Produktionsprozesses, wie z.B. über benötigte Werkzeuge, Konstruktionsschritte oder Eigenschaften von Materialen. Ein Konstruktionsprozess eines technischen Systems umfasst in der Regel eine Planung mittels rechnergestützter Designsoftware für Hardware-Komponenten, einen Zusammenbau der einzelnen Teile einer geplanten Geometrie, eine Berechnung von Eigenschaften eines technischen Systems und eine Validierung.

Für die Planung kann beispielsweise eine rechnergestützte Konstruktionssoftware und/oder Software zur Strukturmechanik genutzt werden, um Eigenschaften eines technischen Systems zu berechnen. Insbesondere sind Berechnungen und/oder Planungen in der Regel auf ein spezielles technisches System und/oder eine Komponente eines technischen Systems zugeschnitten. Eigenschaften und/oder Abhängigkeiten werden folglich in der Regel für das jeweilige technische System oder für eine Komponente bestimmt und können häufig nicht einfach auf ein anderes technisches System übertragen werden. Daher ist häufig eine Neuberechnung und/oder Neuplanung für die Konstruktion eines neuen technischen Systems, mit z.B. einer neuen Geometrie oder Architektur, gefordert. Des Weiteren kann eine anschließende Verifizierung des Systems zusätzliche Rechenleistung benötigen.

Es sind des Weiteren maschinelle Lernverfahren, insbesondere unüberwachte maschinelle Lernverfahren, wie z.B. künstliche neuronale Netze, bekannt. Insbesondere können sogenannte Generative Adversarial Networks, zu Deutsch "erzeugende gegnerische Netzwerke", genutzt werden. Diese erzeugenden gegnerischen Netzwerke umfassen in der Regel zwei künstliche Neuronale Netze und werden typischerweise zur Generierung von Bildern aus Zufallsdaten genutzt.

Es ist eine Aufgabe der Erfindung, eine Konstruktion eines technischen Systems und/oder einer Komponente eines technischen Systems zu vereinfachen und/oder zu beschleunigen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Verfahren zum rechnergestützten Generieren einer Komponente für ein technisches System, mit den Verfahrensschritten:
- Einlesen von Anwendungsdaten, die erste Attribute von ersten Komponenten eines technischen Systems umfassen, in ein trainiertes maschinellen Lernverfahren, wobei das maschinelle Lernverfahren darauf trainiert ist, Attribute von verschiedenen Komponenten eines technischen Systems derart zu kombinieren, dass aus der Kombination der Attribute eine zu diesen Komponenten ähnliche Komponente generiert wird,
- Ausführen des trainierten maschinellen Lernverfahrens mit den Anwendungsdaten, woraus eine den ersten Komponenten ähnliche neue Komponente aus kombinierten ersten Attributen verschiedener erster Komponenten generiert wird,
- Ausgeben der neuen Komponente.

Es ist ein Vorteil des erfindungsgemäßen Verfahrens, dass eine neue Komponente und/oder ein Modell einer neuen Komponente für ein technisches System aus Attributen bereits bekannter Komponenten eines oder mehrerer technischer Systeme mittels einer maschinellen Lernroutine generiert werden kann. Dazu können Attribute der bereits bekannten Komponenten miteinander geeignet kombiniert werden, wobei insbesondere deren semantische Bedeutung bzw. Verknüpfungen zueinander genutzt werden. Eine Komponente kann insbesondere auch lediglich ein Modell, wie z.B. ein Simulationsmodell, Datenmodell, Domänenmodell, Computermodell oder Designmodell, einer Komponente, insbesondere einer Hardware-Komponente, sein.

Es kann insbesondere aus einer Kombination von einfachen Attributen eine komplexere Komponente oder ein komplexeres technisches System erzeugt werden, d.h. beispielsweise eine Beschreibung der komplexen Komponente ausgegeben werden. Unter "Kombination" kann insbesondere auch Aggregation, Verbindung, Gruppierung, Zusammenführung, Bündelung oder Zusammenfassung verstanden werden. Die Attribute und/oder Eigenschaften der neu erzeugten Komponente können insbesondere aus den kombinierten Attributen abgeleitet werden. Eine Ähnlichkeit der neuen Komponenten zu den ursprünglichen ersten Komponenten kann beispielsweise anhand der jeweiligen Attribute, wie z.B. durch einen Vergleich der jeweiligen Attribute, ermittelt werden, wobei unter "ähnlich" insbesondere "gleichartig", "vergleichbar", "zumindest teilweise übereinstimmend", "gleichwertig", "entsprechend" verstanden werden kann.

Im Zusammenhang mit der Erfindung kann unter einem technischen System eine Maschine, eine Werkzeugmaschine, ein Werkzeug, ein Motor, eine Turbine, eine Gasturbine, ein Transformator, eine industrielle Anlage, ein Kraftwerk, eine Windkraftanlage, oder ähnliches verstanden werden. Eine Komponente eines technischen Systems kann beispielsweise eine Hardware- oder eine Softwarekomponente sein, wobei insbesondere eine Komponente als ein einfaches Objekt, Bauteil, Element oder Gegenstand und/oder als ein Teil eines komplexen technischen Systems verstanden werden kann. Eine Komponente und/oder ein Modell einer Komponente kann insbesondere ein Abbild, ein Simulationsmodell, Datenmodell, Domänenmodell, Computermodell oder Designmodell einer Hardware-Komponente sein, wie zum Beispiel ein computergestütztes Designmodell für eine Hardware-Komponente.

Unter "generieren" kann insbesondere "erzeugen", "zusammenstellen", "verbinden", "verknüpfen", "kombinieren", "kompilieren", "bilden", "produzieren", oder ähnliches verstanden werden.

Insbesondere sind einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf.

Ein Attribut einer Komponente kann im Zusammenhang mit der Erfindung eine Eigenschaft und/oder eine Abhängigkeit und/oder eine Relation und/oder eine Beziehung und/oder ein Zusammenhang und/oder eine Funktion und/oder eine Funktionalität und/oder eine Aufgabe und/oder einen Verwendungszweck beschreiben. Eine Komponente kann insbesondere mehr als ein Attribut umfassen, d.h. einer Komponente kann mindestens ein Attribut zugeordnet sein. Insbesondere kann ein Attribut einer Komponente semantisch erfasst werden, d.h. es kann die Bedeutung des Attributs und/oder ein Zusammenhang mit anderen Attributen bestimmt und formalisiert erfasst werden. Die Attribute können erfasst und/oder kategorisiert und als Anwendungsdaten bereitgestellt und/oder eingelesen werden. Die Anwendungsdaten können insbesondere auch Informationen über die ersten Komponenten umfassen. Insbesondere können Attribute von verschiedenen Komponenten miteinander kombiniert werden, wobei beispielsweise lediglich vorteilhafte bzw. sinnvolle Kombinationen selektiert werden.

Ein maschinelles Lernverfahren kann beispielsweise ein generatives maschinelles Lernverfahren sein und/oder ein oder mehrere künstliche neuronale Netze umfassen. Das maschinelle Lernverfahren kann vorzugsweise darauf trainiert sein, eine neue Komponente aus einer Kombination von Attributen von verschiedenen Komponenten unter Berücksichtigung der Semantik der Attribute zu generieren.

Sofern es in der nachfolgenden Beschreibung nicht anders angegeben ist, beziehen sich die Begriffe "durchführen", "erfolgen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können. Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, möglicherweise in Kombination mit einer Speichereinheit zum Speichern von Programmbefehlen, etc. handeln.

Insbesondere kann mittels eines geeigneten maschinellen Lernverfahrens eine neue Komponente und/oder ein Modell einer Komponente generiert werden, wobei durch die Semantik der Attribute eine logische bzw. sinnvolle Verknüpfung der Attribute zu einer neuen Komponente erfolgen kann. Es können neue Komponenten, auch neue Artefakte, synthetisiert werden, wobei die Attribute derart vorteilhaft miteinander kombiniert werden, dass beispielsweise ein Zweck, eine Leistung, eine Qualität oder ähnliches einer ursprünglichen Komponente verbessert oder weiterentwickelt werden kann. Eine Ausgabe des Verfahrens kann beispielsweise ein Designmodell einer neuen Komponente mit kombinierten Attributen sein. Dies ermöglicht einen einfachen und schnellen Engineering- und/oder Design-Prozess für neue Komponenten für ein technisches System.

In einer vorteilhaften Ausführungsform des Verfahrens kann die Generierung der neuen Komponente aus einer Kombination von Attributen mittels arithmetischer Operationen erfolgen.

Insbesondere kann eine neue Komponente mittels im Attributraum sinnvollen bzw. logischen arithmetischen Operationen generiert werden. Eine arithmetische Operation kann beispielsweise Addition oder Subtraktion sein. Gemäß der semantischen Information, die einem Attribut zugeordnet ist, kann beispielsweise ein Attribut einer Komponente derart gegen ein anderes Attribut einer anderen Komponente des gleichen Attributtyps ausgetauscht werden, dass eine neue Komponente generiert werden kann, die beispielsweise dieselbe Funktion wie die ursprüngliche Komponente erfüllt. Ein Attributtyp kann beispielsweise anhand der semantischen Information ermittelt werden.

In einer weiteren vorteilhaften Ausführungsform des Verfahrens kann die Kombination der Attribute der neuen Komponente mit mindestens einer Vorgabe verglichen werden und die neue Komponente kann abhängig vom Vergleichsergebnis ausgegeben werden.

Mittels einer Vorgabe können generierte neue Komponenten vorzugsweise vor der Ausgabe selektiert werden. Eine Vorgabe kann beispielsweise eine Regel, ein zu erfüllender Zweck einer Komponente, eine Fertigungstoleranzangabe, eine Leistungsbeurteilung, eine Konstruktionsvorgabe, eine Integrationsvorgabe für das technische System, oder ähnliches sein, mit der die generierte Komponente verglichen wird. Abhängig davon, ob die Komponente die Vorgabe erfüllt, kann diese ausgegeben werden. Insbesondere kann eine Vorgabe anhand der eingelesenen Anwendungs- oder Trainingsdaten ermittelt werden, wie z.B. anhand einer Häufigkeitsverteilung der Attribute der ersten Komponenten.

In einer weiteren vorteilhaften Ausführungsform des Verfahrens kann ein Konstruktionsplan für die neue Komponente anhand der kombinierten Attribute abgeleitet werden.

Eine semantische Beschreibung der kombinierten ersten Attribute kann vorteilhaft miteinander kombiniert, als kombinierte semantische Beschreibung der neuen Komponente erfasst und daraus beispielsweise ein Konstruktionsplan erstellt werden. Aus den kombinierten ersten Attributen der neuen Komponente kann beispielsweise ein Konstruktionsplan für die neue Komponente derart bestimmt werden, dass insbesondere keine gesamte Berechnung, Simulation oder Planung für die neue Komponente notwendig ist. Insbesondere kann ein Konstruktionsplan für ein Modell einer Komponente erstellt werden.

In einer weiteren vorteilhaften Ausführungsform des Verfahrens kann der Konstruktionsplan ausgegeben werden und daraus ein Produktionsprozess für die Generierung einer neuen Komponente abgeleitet werden.

Ein Konstruktionsplan kann insbesondere derart gestaltet sein, dass einzelne Produktionsschritte und/oder benötigte Rohstoffe oder Eingabewerte daraus abgeleitet werden können. Die Produktionsschritte eines Produktionsprozesses können beispielsweise an ein Konstruktionssystem übermittelt und dort ausgeführt werden.

In einer weiteren vorteilhaften Ausführungsform des Verfahrens kann das trainierte maschinelle Lernverfahren ein generatives neuronales Netz und ein gegensätzliches neuronales Netz umfassen, die gemeinsam darauf trainiert sind, dass
- das gegensätzliche neuronale Netz einen Unterschied zwischen Komponenten und einer vom generativen neuronalen Netz generierten neuen Komponente ermittelt,
   und
- das generative neuronale Netz Attribute von verschiedenen Komponenten derart kombiniert, dass aus der Kombination von Attributen eine diesen Komponenten ähnliche neue Komponente generiert wird.

Insbesondere kann das maschinelle Lernverfahren ein Verfahren des unüberwachten Lernens sein, wie z.B. Generative Adversarial Networks, kurz als GAN bekannt und zu Deutsch "erzeugende gegnerische Netzwerke", die mindestens zwei künstliche neuronale Netze umfassen. Das maschinelle Lernverfahren kann insbesondere derart anhand von eingelesenen Komponenten und deren Attribute trainiert bzw. konditioniert sein, dass eine neue Komponente generiert wird, die ähnlich zu einer der vorgegebenen Komponenten ist, aber beispielsweise ein anderes Attribut vom gleichen Attributtyp umfasst, wobei unter "ähnlich" insbesondere "gleichartig", "vergleichbar", "zumindest teilweise übereinstimmend", "gleichwertig", "entsprechend" verstanden werden kann. Es kann insbesondere die Semantik der Attribute vom maschinellen Lernverfahren erlernt bzw. berücksichtigt werden. Zur Bestimmung der Ähnlichkeit oder des Unterschieds der Komponenten kann insbesondere eine semantische Beschreibung der Attribute berücksichtigt werden, d.h. zum Beispiel können lediglich Komponenten generiert werden, die einen gleichen oder ähnlichen Zweck in einem technischen System erfüllen.

Das gegensätzliche neuronale Netz, oder auch als gegnerisches neuronales Netz bezeichnet, kann anhand von Trainingsdaten darauf trainiert werden, kombinierte Attribute einer vom generativen neuronalen Netz erzeugten Komponente mit Attributen der ursprünglichen Komponenten zu vergleichen und daraus einen Unterschied zu bestimmen. In anderen Worten, das gegensätzliche neuronale Netz wird darauf trainiert, neu generierte Komponenten von den vorgegebenen Komponenten zu unterscheiden. Trainingsdaten können insbesondere Attribute von vorgegebenen Komponenten mindestens eines technischen Systems umfassen und sind vorzugsweise ähnlich zu Anwendungsdaten. Das generative neuronale Netz wird anhand von Trainingsdaten darauf trainiert, aus einer Menge an Attributen eine neue Komponente zu generieren, deren Attribute möglichst ähnlich zu denen der Trainingsdaten sind. Vorzugsweise erzeugt das generative neuronale Netz eine Komponente, die das gegensätzliche neuronale Netz nicht von den ursprünglichen Komponenten unterscheiden kann.

Die beiden Netze können insbesondere gemeinsam trainiert werden, wobei das Training iterativ erfolgt. Ziel des Trainings ist beispielsweise eine neue Komponente zu erzeugen, die zumindest ähnlich zu den vorgegebenen Komponenten ist, aber mindestens ein ausgetauschtes Attribut aufweist. Vorzugsweise wird damit eine neue Komponente aus einer möglichst sinnvollen bzw. logischen Kombination von Attributen generiert. In anderen Worten, die kombinierten Attribute der neuen Komponenten folgen vorzugsweise einer Häufigkeitsverteilung der Attribute der vorgegebenen Komponenten.

In einer weiteren vorteilhaften Ausführungsform des Verfahrens kann eine erste Komponente mittels eines Sensors erfasst werden und es kann aus den Sensordaten ein Attribut abgeleitet werden.

Beispielsweise können eine oder mehrere Komponenten eines oder mehrerer technischer Systeme mittels eines Sensors erkannt und erfasst werden. Insbesondere kann anhand der Sensordaten ein Attribut und seine semantische Beschreibung erfasst und kategorisiert werden. Beispielsweise kann eine Kamera eine Komponente detektieren und anhand eines Kamerabildes können eine Funktionsweise und/oder ein Material der Komponente bestimmt und als Attribut erfasst werden.

In einer weiteren vorteilhaften Ausführungsform des Verfahrens kann die neue Komponente anhand der kombinierten Attribute bewertet werden.

Eine neue Komponente kann insbesondere anhand der kombinierten ersten Attribute klassifiziert und/oder anhand vorgegebener Anforderungen analysiert werden. Beispielsweise kann auch eine Verifizierung der neu generierten Komponente anhand der kombinierten Attribute erfolgen.

Ein weiterer Aspekt der Erfindung betrifft ein Verfahren zum Trainern eines maschinellen Lernverfahrens zum rechnergestützten Generieren einer neuen Komponente für ein technisches System, wobei
- Attribute von Komponenten eines technischen Systems als Trainingsdaten eingelesen werden
   und
- das maschinelle Lernverfahren anhand der Trainingsdaten darauf trainiert wird, die Attribute von verschiedenen Komponenten derart zu kombinieren, dass aus der Kombination der Attribute eine zu diesen Komponenten ähnliche Komponente generiert wird.

Das maschinelle Lernverfahren kann beispielsweise mindestens ein künstliches neuronales Netz umfassen und/oder insbesondere ein generatives, unüberwachtes Lernverfahren sein. Beispielsweise kann das maschinelle Lernverfahren "erzeugende gegnerische Netzwerke" umfassen. Das maschinelle Lernverfahren kann vorzugsweise mit Trainingsdaten, die ähnlich, z.B. einer gleichen Häufigkeitsverteilung folgend, zu Anwendungsdaten sind. Beispielsweise können Trainingsdaten Attribute vorgegebener Komponenten von mindestens einem technischen System umfassen. Das Training des maschinellen Lernverfahrens erfolgt vorzugsweise auf einem Prozessor.

Gemäß einem weiteren Aspekt betrifft die Erfindung eine Vorrichtung zum rechnergestützten Generieren einer Komponente für ein technisches System, umfassend einen Prozessor, der so konfiguriert ist, dass er die Schritte eines erfindungsgemäßen Verfahrens ausführt. Die Vorrichtung kann insbesondere derart eingerichtet sein, die Schritte eines erfindungsgemäßen Verfahrens durchzuführen.

In einer vorteilhaften Ausführungsform der Vorrichtung kann das maschinelle Lernverfahren ein generatives neuronales Netz und ein gegensätzliches neuronales Netz umfassen, die gemeinsam darauf trainiert sind, dass
- das gegensätzliche neuronale Netz einen Unterschied zwischen Komponenten und einer vom generativen neuronalen Netz generierten neuen Komponente ermittelt,
   und
- das generative neuronale Netz Attribute von verschiedenen Komponenten derart kombiniert, dass aus der Kombination von Attributen eine diesen Komponenten ähnliche neue Komponente generiert wird.

In einer weiteren vorteilhaften Ausführungsform kann die Vorrichtung mit mindestens einem Sensor zum Erfassen einer Komponente gekoppelt sein. Die Vorrichtung kann beispielsweise auch einen Sensor umfassen.

In einer weiteren vorteilhaften Ausführungsform kann die Vorrichtung mit einem Konstruktionssystem gekoppelt sein, wobei das Konstruktionssystem derart eingerichtet ist, eine neue Komponente für ein technisches System zu konstruieren.

Insbesondere kann anhand von Vorgaben eines Produktionsprozesses und/oder eines Konstruktionsplans eine Montage, Installation, Implementierung, Konstruktion oder ähnliches einer ausgegebenen neuen Komponente mittels eines Konstruktionssystems erfolgen. Ein Konstruktionssystem kann beispielsweise ein Industrieroboter oder eine Produktionsanlage sein.

Des Weiteren betrifft die Erfindung ein Computerprogrammprodukt, das direkt in einen programmierbaren Computer ladbar ist, umfassend Programmcodeteile, die dazu geeignet sind, die Schritte eines erfindungsgemäßen Verfahrens durchzuführen, und ein computerlesbaren Datenträger, auf dem das Computerprogrammprodukt gespeichert ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
Fig. 1: ein Ablaufdiagramm eines erfindungsgemäßen Verfahrens;
Fig. 2: eine schematische Darstellung eines erfindungsgemäßen Verfahrens; und
Fig.3: eine schematische Darstellung der erfindungsgemäßen Vorrichtung.

Einander entsprechende Teile sind in allen Figuren mit den gleichen Bezugszeichen versehen.

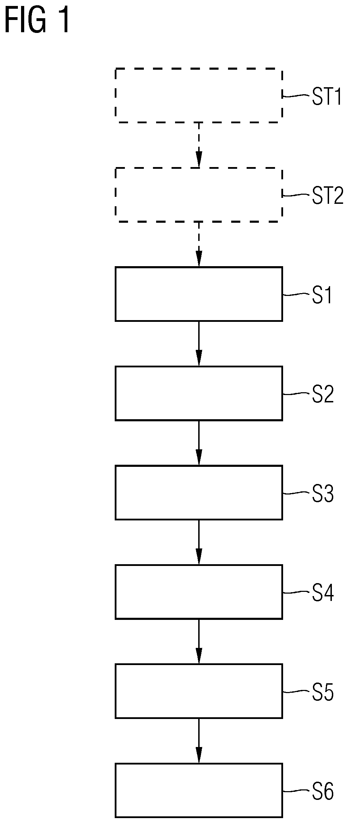

Figur 1 zeigt ein Ablaufdiagramm der Schritte eines erfindungsgemäßen Verfahrens zum rechnergestützten Generieren einer Komponente und/oder eines Modells einer Komponente für ein technisches System.

Im Folgenden werden die Verfahrensschritte am Beispiel einer Konstruktion einer neuen Rohrleitung zum Transport einer Flüssigkeit vorgestellt. Ein technisches System kann beispielsweise eine Rohrleitung für den Transport einer Flüssigkeit sein, wobei eine Pumpleistung für die Flüssigkeit in der Rohrleitung berechnet werden kann. Das technische System kann in einzelne Komponenten unterteilt werden, wie z.B. Stücke der Rohrleitung mit einer bestimmten Geometrie. Des Weiteren kann ein Simulationsmodell des technischen Systems bereitgestellt werden. Eine Komponente kann Attribute mit unterschiedlichen Attributtypen aufweisen, wie z.B. geometrische Größen, Materialeigenschaften und bestimmtes Strömungsverhalten, die jeweils semantisch beschrieben werden können. Das Strömungsverhalten ist in der Regel abhängig vom Rohrmaterial, der Geometrie und/oder der Art der Flüssigkeit.

Im ersten Schritt, ST1, eines erfindungsgemäßen Verfahrens werden Trainingsdaten zum Trainieren eines maschinellen Lernverfahrens erfasst. Dazu wird eine Vielzahl von Attributen von vorgegebenen Komponenten mindestens eines technischen Systems erfasst und als Trainingsdaten bereitgestellt. Beispielsweise kann eine Komponente und deren Attribute mittels eines Sensors erfasst werden. Eine Komponente kann eine Hardware-Komponente oder eine Software-Komponente oder eine Kombination aus beidem sein. Insbesondere kann eine Komponente auch ein Modell einer Hardware-Komponente sein. Die Attribute der Komponenten werden semantisch erfasst, kategorisiert und als Trainingsdaten bereitgestellt. Die Trainingsdaten können auch auf einer Speichereinheit gespeichert sein und von dort eingelesen werden.

Insbesondere wird eine semantische Information der Attribute erfasst, wie z.B. deren Abhängigkeiten und Zusammenhänge mit anderen Attributen. Beispielsweise können für eine Rohrleitung das Material der Rohrleitung und das Strömungsverhalten voneinander abhängen. Die Attribute verschiedener Komponenten können beispielsweise ähnlich sein, d.h. denselben Attributtyp aufweisen, oder z.B. einen ähnlichen Zweck erfüllen und demnach kategorisiert werden. Die Trainingsdaten umfassen somit Attribute von mindestens einer Komponente und deren semantische Information. Vorzugsweise umfassen die Trainingsdaten eine Vielzahl an Attributen verschiedener Attributtypen und sind nach Attributtypen sortiert und/oder kategorisiert.

Im Schritt ST2 wird anhand der Trainingsdaten ein geeignetes maschinelles Lernverfahren derart trainiert, eine neue Komponente und/oder ein Modell einer neuen Komponente für ein technisches System aus einer geeigneten Kombination von Attributen verschiedener vorgegebener Komponenten zu generieren. Insbesondere kann ein unüberwachtes maschinelles Lernverfahren bereitgestellt und trainiert werden. Beispielsweise werden "erzeugende gegnerische Netzwerke" (engl. Generative Adversarial Networks), die zwei künstliche neuronale Netze umfassen, genutzt und anhand der Trainingsdaten trainiert bzw. konditioniert.

Bei "erzeugenden gegnerischen Netzwerken" werden ein generatives und ein gegensätzliches neuronales Netz bereitgestellt. Das generative neuronale Netz wird darauf trainiert, aus einer Menge von Attributen, beispielsweise sortiert nach Attributtypen, Attribute verschiedener Komponenten derart zu kombinieren, dass eine neue Komponente generiert wird, die den ursprünglichen Komponenten ähnlich ist. Das gegensätzliche neuronale Netz wird derart anhand der Trainingsdaten trainiert, einen Unterschied zwischen einer vom generativen neuronalen Netz generierten Komponente und einer ursprünglich vorgegebenen Komponente zu bestimmen. Ein Unterschied und/oder eine Ähnlichkeit kann insbesondere anhand der Attribute der jeweiligen Komponenten ermittelt werden. Beispielsweise ist eine derart generierte neue Komponente den ursprünglichen Komponenten ähnlich, wenn sie jeweils mindestens ein gemeinsames Attribut umfassen. Die beiden erzeugenden gegnerischen neuronalen Netze werden gemeinsam anhand der Trainingsdaten trainiert und somit deren Ausgabe iterativ verbessert, so dass vorzugsweise eine neue Komponente aus kombinierten Attributen verschiedener Komponenten generiert wird, die das gegnerische neuronale Netz nicht von diesen vorgegebenen Komponenten unterscheiden kann.

Insbesondere kann die Generierung der neuen Komponente aus den kombinierten Attributen mittels arithmetischer Operationen, wie Subtraktion und Addition, erfolgen. Die Generierung der neuen Komponente erfolgt dabei vorzugsweise abhängig von der semantischen Information, so dass vorzugsweise lediglich sinnvolle Kombinationen von Attributen gebildet werden. Die semantische Information kann insbesondere vom gegensätzlichen neuronalen Netz gelernt werden.

Das gemeinsame Training der beiden neuronalen Netze ist insbesondere ein iterativer Prozess, d.h. die beiden künstlichen neuronalen Netze werden schrittweise trainiert. Ziel des Trainings ist es, mindestens eine Komponente und/oder ein Modell einer Komponente zu erzeugen, wobei die Komponente und/oder das Modell eine neue Kombination von Attributen aufweist, die mit den Attributen der Trainingsdaten vergleichbar ist. Das Training künstlicher neuronaler Netze erfolgt insbesondere durch die Anpassung oder Modifikation von Gewichten der künstlichen Neuronen, um eine Ausgabe gemäß einer Vorgabe zu optimieren.

Alternativ kann ein für das Verfahren geeignetes maschinelles Lernverfahren bereitgestellt werden, welches darauf trainiert ist, eine neue Komponente gemäß der Erfindung zu generieren.

Im Schritt S1 werden Anwendungsdaten, die erste Attribute von ersten Komponenten mindestens eines technischen Systems umfassen, in das trainierte maschinelle Lernverfahren eingelesen. Die Anwendungsdaten sind vorzugsweise zumindest ähnlich zu den Trainingsdaten oder ein Teil der Trainingsdaten. Anschließend wird das trainierte maschinelle Lernverfahren ausgeführt, Schritt S2, woraus eine den ersten Komponenten ähnliche, neue Komponente aus kombinierten ersten Attributen verschiedener erster Komponenten generiert wird.

Zum Beispiel kann aus einer Menge von Attributen von verschiedenen Modellen von Rohrleitungen und darin transportierten Flüssigkeiten mittels des maschinellen Lernverfahrens ein Modell einer neuen Rohrleitung mit neuen Eigenschaften synthetisiert werden. Die Modellgenerierung für die neue Rohrleitung erfolgt beispielsweise indem ein Modell einer Rohrleitung, durch welche eine Flüssigkeit mit einer niedrigen Viskosität gepumpt wird, als vorgegebenes Ausgangsmodell genutzt wird. Ein Attribut der ursprünglichen Rohrleitung kann beispielsweise die niedrige Viskosität der Flüssigkeit beschreiben, so dass durch Subtraktion dieses Attributs und durch Addition eines Attributs des gleichen Attributtyps, das eine hohe Viskosität beschreibt, ein Modell einer neuen Rohrleitung generiert werden. Die Kombination der verschiedenen Attribute, abhängig von ihrer semantischen Beschreibung, durch das maschinelle Lernverfahren, erlaubt ein Vielfaches an Möglichkeiten, neue Komponenten zu generieren. Beispielsweise können in den Trainingsdaten verschiedene Fertigungsmaterialien von Rohrleitungen als Attribute kategorisiert werden, so dass durch verschiedene Kombinationen eine Vielzahl an möglichen Modellen von Rohrleitungen generiert werden kann.

Insbesondere kann eine neue generierte Komponente, d.h. beispielsweise ein neu generiertes Simulationsmodell einer Hardware-Komponente wie einer Rohrleitung, anhand der kombinierten Attribute bewertet werden.

Die neu generierte Komponente und/oder das Modell einer neu generierten Komponente kann anschließend ausgegeben werden, Schritt S3. Die neu generierte Komponente kann außerdem zunächst mit einer Vorgabe, z.B. einer Anforderung an die erzeugte Komponente, verglichen werden, Schritt S4. Die neue Komponente und/oder deren Modell kann abhängig vom Vergleichsergebnis ausgegeben werden. Eine Ausgabe einer Software-Komponente kann beispielsweise Programmcode umfassen. Für die Ausgabe einer Hardware-Komponente kann insbesondere zunächst ein Simulationsmodell einer Hardware-Komponente erzeugt werden.

Erfüllt eine neu generierte Komponente nicht die Vorgabe, kann der Generierungsprozess beispielsweise anhand eines anderen Datensatzes wiederholt werden. Dazu kann der andere Datensatz dem trainierten maschinellen Lernverfahren übermittelt und eingelesen werden. Außerdem kann der Generierungsprozess ausgehend von den generierten Komponenten und deren neu kombinierten Attributen wiederholt werden.

Im Schritt S5, kann abhängig von der Ausgabe des maschinellen Lernverfahrens ein Konstruktionsplan für die neue Komponente abgeleitet werden. Dies ist insbesondere vorteilhaft, wenn beispielsweise lediglich ein Modell für eine neue Hardware-Komponente erzeugt wird. Anhand der kombinierten Attribute der neuen Komponente können beispielsweise Konstruktionsschritte ermittelt werden. Konstruktionsschritte können für eine Hardware-Komponente beispielsweise auch benötigte Werkzeuge und Materialien umfassen. Für eine Software-Komponente kann ein Konstruktionsplan beispielsweise Regeln oder Abhängigkeiten für die Kompilierung oder Implementierung umfassen.

Außerdem erlaubt die Aggregation der Attribute zu einer neuen Komponente eine kombinierte semantische Beschreibung. Durch die Aggregation der Attribute simpler Komponenten zu einer neuen, komplexeren Komponente mit kombinierten Attributen, können die kombinierten Eigenschaften einfach bestimmt werden bzw. die neu generierte Komponente damit einfach validiert werden.

Anhand des Konstruktionsplans für die neue Komponente können Schritte eines Produktionsprozesses erstellt werden, siehe Schritt S6. Vorzugsweise sind Produktionsschritte für die einzelnen ersten Attribute der ersten Komponenten bekannt, so dass durch die vorteilhafte Kombination bzw. Aggregation der Attribute zu einer neuen, diesen ersten Komponenten ähnlichen Komponente in einfacher Weise eine Produktionskette für die neue Komponente erstellt werden kann. Der Produktionsplan und/oder der Konstruktionsplan kann einem Konstruktionssystem übermittelt werden, welches eine neue Komponente konstruiert.

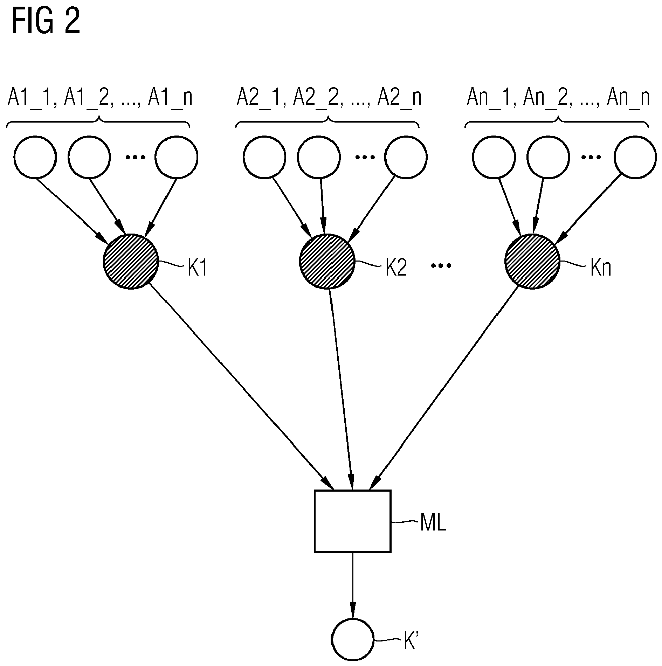

Figur 2 zeigt eine schematische Darstellung eines erfindungsgemäßen Verfahrens zum rechnergestützten Generieren einer neuen Komponente für ein technisches System. Es sind vorgegebene Komponenten K1, K2, ..., Kn eines oder mehrerer technischer Systeme gezeigt. Diesen Komponenten K1, K2, ..., Kn sind jeweils Attribute A1_1, A1_2, ..., A1_n, A2_1, A2_2, ..., A2_n, und An_1, An_2, ..., An_n zugeordnet. Die Attribute können verschiedene Attributtypen aufweisen und anhand dieser kategorisiert werden. Die Attribute werden als Trainingsdaten erfasst und in die Datenstruktur des maschinellen Lernverfahrens ML eingelesen. Erfindungsgemäß wird ein geeignetes maschinelles Lernverfahrens ML, insbesondere Generative Adversarial Networks, darauf trainiert, die Attribute A1_1, A1_2, ..., A1_n, A2_1, A2_2, ..., A2_n, und An_1, An_2, ..., An_n verschiedener Komponenten K1, K2, ..., Kn derart zu kombinieren, dass eine neue Komponente K' generiert wird, die ähnlich zu den vorgegebenen Komponenten ist. In anderen Worten, ein Ziel des Trainings eines generativen maschinellen Lernverfahrens ML ist die Erzeugung einer neuen Komponente K', deren neu kombinierte Attribute ähnlich zu den Trainingsdaten sind.

Somit kann mit dem trainierten maschinellen Lernverfahren ML eine Vielzahl an neuen Komponenten aus kombinierten Attributen rechnergestützt generiert werden. Diese neuen Komponenten können beispielsweise anhand ihrer kombinierten Attribute validiert werden, ohne dass beispielsweise eine Simulation der gesamten neuen Komponente notwendig ist. Aus den kombinierten Attributen von verschiedenen, simplen Komponenten können zusammengesetzte Eigenschaften der neuen Komponente ermittelt werden.

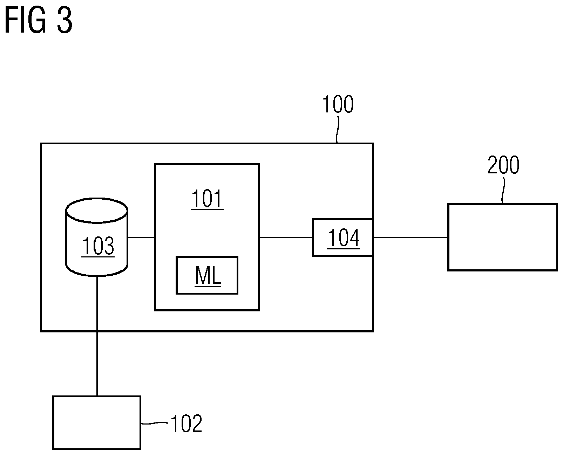

Figur 3 zeigt eine erfindungsgemäße Vorrichtung 100 in Blockdarstellung, die mindestens einen Prozessor 101 umfasst. Der Prozessor 101 ist derart konfiguriert, Schritte eines erfindungsgemäßen Verfahrens durchzuführen. Demnach kann auf dem Prozessor 101 ein geeignetes maschinelles Lernverfahren ML derart trainiert und/oder ausgeführt werden, eine neue Komponente und/oder ein Modell einer neuen Komponente für ein technisches System zu generieren.

Die Vorrichtung 100 kann beispielsweise mit einem Sensor 102 gekoppelt sein, der mindestens eine Komponente eines oder mehrerer technischer Systeme erfasst. Die Attribute einer Komponente werden beispielsweise anhand der Sensordaten semantisch erfasst, kategorisiert und als Trainingsdaten oder Anwendungsdaten in einer Speichereinheit 103 gespeichert und/oder von dieser abgerufen und an den Prozessor 101 übertragen. Die Vorrichtung 100 kann des Weiteren auch ein Eingabemodul umfassen, worüber beispielsweise alternative Daten zum Ausführen des trainierten maschinellen Lernverfahrens eingelesen werden können.

Die Vorrichtung 100 kann ein Ausgabemodul 104 umfassen, womit eine neue Komponente und/oder ein Konstruktionsplan und/oder Produktionsschritte für eine neue Komponente ausgegeben werden können. Beispielsweise ist die Vorrichtung 100 mit einem Konstruktionssystem 200 gekoppelt, welches die Konstruktion einer neuen Komponente gemäß einem Konstruktionsplan umsetzen kann. Ein Konstruktionssystem 200 kann beispielsweise ein Industrieroboter, eine Produktionsanlage oder ein Designprogramm sein.

Die technische Planung und Umsetzung einer neuen technischen Komponente kann mittels einer erfindungsgemäßen Vorrichtung 100 vereinfacht werden, da durch eine geeignete Kombination aus Attributen bekannter Komponenten die Berechnungs- und/oder Planungszeit für eine neue technische Komponente reduziert werden kann. Somit können neue Komponenten rechnergestützt synthetisiert und danach getestet und validiert werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum rechnergestützten Generieren einer neuen Komponente für ein technisches System, mit den Verfahrensschritten:
- Einlesen (S1) von Anwendungsdaten, die erste Attribute von ersten Komponenten eines technischen Systems umfassen, in ein trainiertes maschinelles Lernverfahren (ML), wobei das maschinelle Lernverfahren (ML) darauf trainiert ist, Attribute von verschiedenen Komponenten eines technischen Systems derart zu kombinieren, dass aus der Kombination der Attribute eine zu diesen Komponenten ähnliche Komponente generiert wird,
- Ausführen (S2) des trainierten maschinellen Lernverfahrens (ML) mit den Anwendungsdaten, woraus eine den ersten Komponenten ähnliche neue Komponente (K') aus kombinierten ersten Attributen verschiedener erster Komponenten generiert wird,
- Ausgeben (S3) der neuen Komponente (K').

2. Verfahren nach Anspruch 1, wobei die Generierung der neuen Komponente (K') aus einer Kombination von Attributen mittels arithmetischer Operationen erfolgt.

3. Verfahren nach einem der vorhergehenden Ansprüche, wobei die kombinierten Attribute der neuen Komponente (K') mit mindestens einer Vorgabe verglichen werden und die neue Komponente (K') abhängig vom Vergleichsergebnis ausgegeben wird (S4).

4. Verfahren nach einem der vorhergehenden Ansprüche, wobei ein Konstruktionsplan für die neue Komponente (K') anhand der kombinierten Attribute abgeleitet wird (S5).

5. Verfahren nach einem der vorhergehenden Ansprüche, wobei der Konstruktionsplan ausgegeben und daraus ein Produktionsprozess für die Generierung einer neuen Komponente (K') abgeleitet wird (S6).

6. Verfahren nach einem der vorhergehenden Ansprüche, wobei das trainierte maschinelle Lernverfahren (ML) ein generatives neuronales Netz und ein gegensätzliches neuronales Netz umfasst, die gemeinsam darauf trainiert sind, dass
- das gegensätzliche neuronale Netz einen Unterschied zwischen Komponenten (K1, K2, ..., Kn) und einer vom generativen neuronalen Netz generierten neuen Komponente (K') ermittelt, und
- das generative neuronale Netz Attribute von verschiedenen Komponenten derart kombiniert, dass aus der Kombination von Attributen eine diesen Komponenten ähnliche neue Komponente (K') generiert wird.

7. Verfahren nach einem der vorhergehenden Ansprüche, wobei eine erste Komponente mittels eines Sensors (102) erfasst wird und aus den Sensordaten mindesten ein erstes Attribut abgeleitet wird.

8. Verfahren nach einem der vorhergehenden Ansprüche, wobei die neue Komponente (K') anhand der kombinierten Attribute bewertet wird.

9. Verfahren nach einem der vorhergehenden Ansprüche zum Trainern eines maschinellen Lernverfahrens zum rechnergestützten Generieren einer neuen Komponente für ein technisches System, wobei
- Attribute (A1_1, A1_2, ..., An_n) von Komponenten (K1, K2, ..., Kn) eines technischen Systems als Trainingsdaten eingelesen werden (ST1)
und
- das maschinelle Lernverfahren (ML) anhand der Trainingsdaten darauf trainiert wird, die Attribute von verschiedenen Komponenten derart zu kombinieren, dass aus der Kombination der Attribute eine zu diesen Komponenten ähnliche Komponente (K') generiert wird (ST2).

10. Vorrichtung (100) zum rechnergestützten Generieren einer Komponente für ein technisches System, umfassend einen Prozessor (101), der so konfiguriert ist, dass er die Schritte des Verfahrens nach Anspruch 1 ausführt.

11. Vorrichtung (100) nach Anspruch 10, wobei das trainierte maschinelle Lernverfahren (ML) ein generatives neuronales Netz und ein gegensätzliches neuronales Netz umfasst, die gemeinsam darauf trainiert sind, dass
- das gegensätzliche neuronale Netz einen Unterschied zwischen Komponenten (K1, K2, ..., Kn) und einer vom generativen neuronalen Netz generierten neuen Komponente (K') ermittelt, und
- das generative neuronale Netz Attribute von verschiedenen Komponenten derart kombiniert, dass aus der Kombination von Attributen eine diesen Komponenten ähnliche neue Komponente (K') generiert wird.

12. Vorrichtung (100) nach dem Anspruch 10 oder 11, wobei die Vorrichtung (100) mit mindestens einem Sensor (102) zum Erfassen einer ersten Komponente (K1, K2, ..., Kn) gekoppelt ist.

13. Vorrichtung (100) nach einem der Ansprüche 10 bis 12, die mit einem Konstruktionssystem (200) gekoppelt ist, wobei das Konstruktionssystem (200) derart eingerichtet ist, eine neue Komponente (K') für ein technisches System zu konstruieren.

14. Computerprogrammprodukt, das direkt in einen programmierbaren Computer ladbar ist, umfassend Programmcodeteile, die dazu geeignet sind, die Schritte eines Verfahrens nach einem der Ansprüche 1 bis 9 durchzuführen.

15. Computerlesbarer Datenträger, auf dem das Computerprogrammprodukt nach Anspruch 14 gespeichert ist.
